# FASCICULE DE BREVET EUROPEEN

(11) **EP 2 354 524 B1**
(45) Date de publication et mention de la délivrance du brevet: **20.03.2013**
(21) Numéro de dépôt: 11151717.3
(22) Date de dépôt: 21.01.2011
(51) Int. Cl.: F02M 35/12, F02M 35/10

(54) **Dispositif d'atténuation acoustique pour ligne d'admission d'un moteur thermique, tuyau flexible et ligne d'admission l'incorporant**
Vorrichtung zur akkustischen Dämpfung für eine Ansaugleitung eines thermischen Motors, flexibles Rohr und Ansaugleitung umfassend eine solche Vorrichtung
Acoustic attenuation device for an intake line of a thermal engine, flexible tube and intake line comprising such a device

(30) Priorité: 01.02.2010 FR 1000382
(43) Date de publication de la demande: 10.08.2011
(73) Titulaire: Hutchinson, 75008 Paris (FR)
(72) Inventeur: Caliskan, Alper, 45140, Saint Jean de la Ruelle (FR)
(74) Mandataire: Bolinches, Michel Jean-Marie

(56) Documents cités:
- EP-A2- 1 510 667
- DE-A1- 19 943 246
- DE-A1- 19 956 172
- DE-A1-102007 042 869
- DE-A1-102008 005 458
- DE-U1- 20 122 620
- GB-A- 1 166 843
- US-A- 2 671 523
- US-A- 4 782 912
- US-A- 4 936 413

## Description

La présente invention concerne un dispositif d'atténuation acoustique en particulier pour une ligne d'admission d'un moteur thermique à combustion interne, tel qu'un moteur turbocompressé pour véhicule automobile, un tuyau flexible et une telle ligne d'admission l'incorporant. Ce dispositif est en particulier destiné à être monté entre le turbocompresseur et l'échangeur thermique de cette ligne.

De manière connue, les dispositifs d'atténuation acoustique pour ligne d'admission d'un moteur turbocompressé de véhicule automobile peuvent comporter une enveloppe tubulaire radialement externe qui est destinée à être parcourue par un fluide gazeux sous pression, et avec les portions d'extrémités de laquelle est solidarisée une structure de conduite radialement interne formant deux chambres annulaires de résonance avec l'enveloppe.

On peut par exemple citer le document DE-A1-199 56 172 pour la description d'un tel dispositif, dans lequel deux renflements de l'enveloppe sont reliés entre eux par un rétrécissement radial périphérique dont est solidaire un tronçon médian de la structure de conduite interne, laquelle comporte deux autres tronçons d'extrémité respectivement solidaires des deux portions d'extrémité de l'enveloppe.

Ces dispositifs d'atténuation connus, qui sont intégralement métalliques ou bien entièrement réalisés en matière plastique rigide, sont usuellement raccordés à la ligne d'admission d'air par des tuyaux de raccordement en caoutchouc permettant la prise de rayons de courbure déterminés en fonction de la configuration de la ligne et de la place disponible, des colliers de serrage venant enserrer les points de raccordement entre les extrémités respectives du dispositif et ces tuyaux. En variante, on peut réaliser ces raccordements par soudage ou brasage des extrémités du dispositif d'atténuation sur des tubulures métalliques intermédiaires.

Un inconvénient majeur de ces dispositifs d'atténuation connus réside dans leur encombrement, qui est essentiellement dû aux renflements de l'enveloppe externe qui forment les chambres de résonance en s'écartant d'une hauteur radiale relativement importante de la structure de conduite interne.

Un autre inconvénient de ces dispositifs d'atténuation connus réside dans les opérations supplémentaires requises (e.g. serrage par des colliers ou soudage, notamment) pour réaliser ce raccordement du dispositif d'atténuation aux tuyaux en caoutchouc et, par conséquent, dans le coût global de fabrication et d'assemblage de la ligne d'admission correspondante. De plus, un nouveau raccordement peut être difficile à réaliser pour l'opérateur intervenant lors d'une réparation due à une mauvaise atténuation acoustique, en raison d'un manque de place pour sectionner le tuyau correspondant en vue d'y intégrer le dispositif.

Le document DE-A1-10 2008 005458 présente un dispositif d'atténuation acoustique pour une ligne d'admission d'un moteur thermique à combustion interne qui est intégré à l'intérieur d'un tuyau flexible en y formant deux chambres acoustiques de part et d'autre d'une cloison annulaire reliant le dispositif à ce tuyau.

Le document US-A-4 782 912 présente également un dispositif d'atténuation acoustique pour ligne d'admission d'un tel moteur qui comprend un insert conique intégré à un tuyau flexible et débouchant dans une chambre d'expansion où sont réfléchies les ondes acoustiques provenant du moteur.

Les documents DE-U1-201 22 620, EP-A2-1 510 667 et US-A-2 671 523 présentent d'autres types de dispositifs d'atténuation acoustique qui ne sont chacun pas adaptés pour former des chambres acoustiques en relation avec un tuyau flexible à l'intérieur duquel est monté le dispositif.

Un but de la présente invention est de proposer un dispositif d'atténuation acoustique pour une ligne d'admission d'un moteur thermique à combustion interne qui remédie aux inconvénients précités et notamment présente une structure simple et un encombrement réduit tout en facilitant son raccordement à cette ligne, le dispositif étant destiné à être parcouru par un flux gazeux sous pression et adapté pour être monté radialement à l'intérieur d'un tuyau flexible en formant des chambres acoustiques avec ce dernier, ce dispositif comprenant un tronçon tubulaire et des moyens de formation de ces chambres qui prolongent ce tronçon radialement vers l'extérieur.

A cet effet, un dispositif selon l'invention est tel qu'il comprend un embout tubulaire de raccordement du tuyau à la ligne, embout auquel est fixé ce tronçon par une première partie desdits moyens qui est formée en une première extrémité du tronçon et qui est apte à y diviser ledit flux.

Selon une autre caractéristique de l'invention, ladite première partie desdits moyens peut comporter des extensions sensiblement radiales régulièrement espacées autour de ce tronçon qui divisent ledit flux en ladite première extrémité en autant de chambres séparées entre elles dans la direction circonférentielle. Ces extensions peuvent être formées par des ailettes sensiblement triangulaires qui présentent chacune un sommet radialement externe fixé mécaniquement audit embout.

Selon un premier mode de réalisation de l'invention, ledit tronçon présente une succession de collerettes et de rétrécissements circonférentiels dans la direction axiale, ces collerettes étant conçues pour ménager des espaces annulaires avec le tuyau pour permettre le passage dudit flux entre le tronçon et ce tuyau. Ces collerettes et ces rétrécissements peuvent être formés par une paroi tubulaire fermée dudit tronçon.

Conformément à ce premier mode, une seconde partie desdits moyens de formation de chambres peut être formée vers une seconde extrémité dudit tronçon sous la forme d'au moins un anneau coaxial au tronçon, qui est relié à ce dernier par des ailes radiales régulièrement espacées dans la direction circonférentielle et qui est destiné à être monté au contact du tuyau, de sorte que ces ailes forment autant de chambres divisant ledit flux.

Selon un second mode de réalisation de l'invention, ledit tronçon est prolongé radialement par au moins une cloison annulaire destinée à être montée au contact du tuyau et délimitant deux chambres annulaires qui sont formées entre le tronçon et le tuyau de part et d'autre de cette cloison et avec lesquelles communique le tronçon par des ouvertures de sa paroi, ladite au moins une cloison formant une seconde partie desdits moyens.

Conformément à ce second mode, ce tronçon peut présenter au moins deux ouvertures communiquant avec chacune des deux chambres formées de part et d'autre de ladite au moins une cloison, ces ouvertures étant formées dans la direction circonférentielle par des lumières évidées en arcs de cercle et reliées entre elles par au moins deux pattes axiales de liaison.

On notera qu'un dispositif d'atténuation selon l'invention selon ledit premier ou ledit second mode précités permet avantageusement d'atténuer les hautes fréquences d'une ligne d'admission d'air entre le turbocompresseur et l'échangeur thermique, notamment des fréquences allant de 6000 à 15000 Hz.

On notera également que dans ces deux modes selon l'invention, le positionnement radialement centré du dispositif d'atténuation par rapport à l'axe principal du tuyau souple le recevant - et donc par rapport à la fibre neutre du raccordement ― a pour effet de diviser le flux principal dans la direction circonférentielle via les extensions radiales précitées de type ailettes.

On notera en outre que la forme aérodynamique profilée et discontinue (via les collerettes et rétrécissements dans le premier mode et via les ouvertures dans le second mode) de ces dispositifs à ailettes selon l'invention contribue encore à améliorer cette atténuation acoustique.

Un dispositif d'atténuation selon l'invention, tel que présenté ci-dessus, présente notamment les avantages suivants :
- il présente un encombrement réduit dans la direction radiale et permet de former les chambres acoustiques à l'intérieur du tuyau le recevant sans avoir à créer de volume supplémentaire dans cette direction radiale,
- sa fixation à l'embout de raccordement permet de limiter le nombre de composants pour son intégration à la ligne, et
- il présente une structure relativement simple qui facilite sa fabrication et donc son coût d'obtention.

Avantageusement, un tel dispositif selon l'invention peut être réalisé intégralement en un matériau plastique, par exemple thermoplastique moulé par injection, ou bien, en variante, en un matériau métallique.

Un tuyau flexible selon l'invention pour une ligne d'admission d'un moteur thermique à combustion interne, tel qu'une durite en caoutchouc, est équipé dans son espace radialement interne d'au moins un dispositif d'atténuation acoustique monté au contact de la face radialement interne du tuyau, et il est caractérisé en ce que ledit au moins un dispositif est tel que défini ci-dessus et est monté au contact du tuyau par ledit embout et par lesdits moyens de formation des chambres qui prolongent ledit tronçon.

Selon une autre caractéristique de l'invention, ce tuyau flexible peut être pourvu d'un collier de maintien radialement au droit d'une seconde partie desdits moyens qui a été définie ci-dessus en étant formée selon ledit premier mode par ledit anneau qui est relié au tronçon par lesdites ailes radiales et qui est monté au contact du tuyau, ou bien en étant formée selon ledit second mode par ladite au moins une cloison annulaire qui est montée au contact du tuyau.

Selon une autre caractéristique de ce tuyau de l'invention, ledit embout peut être emmanché dans le tuyau et fixé à celui-ci par un collier de serrage qui est monté autour du tuyau axialement vers l'extérieur de ladite première partie desdits moyens.

Avantageusement, ce tuyau peut être tel que ledit embout est pourvu d'un organe de verrouillage du raccordement.

Une ligne d'admission selon l'invention d'un moteur thermique à combustion interne, tel qu'un moteur turbocompressé pour véhicule automobile, est caractérisée en ce qu'elle comporte au moins un tuyau flexible tel que défini ci-dessus.

D'autres avantages, caractéristiques et détails de l'invention ressortiront du complément de description qui va suivre en référence à des dessins annexés, donnés uniquement à titre d'exemples et dans desquels
la figure 1 est une vue de face et partiellement en coupe axiale d'un dispositif d'atténuation acoustique selon un premier mode de l'invention qui est fixé à un embout verrouillable et qui est destiné à être monté radialement à l'intérieur d'une durite,
la figure 2 est une vue partielle de face et en écorché du dispositif de la figure 1 monté via ses première et seconde extrémités à l'intérieur d'une durite,
la figure 3 est une vue partielle en perspective du dispositif de la figure 1 montrant sa première extrémité fixée à cet embout,
la figure 4 est une vue partielle en perspective du dispositif de la figure 1 montrant sa seconde extrémité destinée à être montée radialement au contact de la durite,
la figure 5 est une vue partielle en perspective et en écorché du dispositif de la figure 1 monté à l'intérieur de la durite selon la figure 2 mais montrant uniquement sa première extrémité fixée à l'embout,
la figure 6 est une vue partielle en perspective du dispositif de la figure 1 monté à l'intérieur de la durite selon la figure 2 mais montrant uniquement sa seconde extrémité montée au contact de la durite, et
la figure 7 est une vue partielle à la fois de face et en coupe axiale d'un dispositif d'atténuation acoustique selon un second mode de l'invention qui est fixé au même embout verrouillable et qui est destiné à être monté à l'intérieur d'une durite.

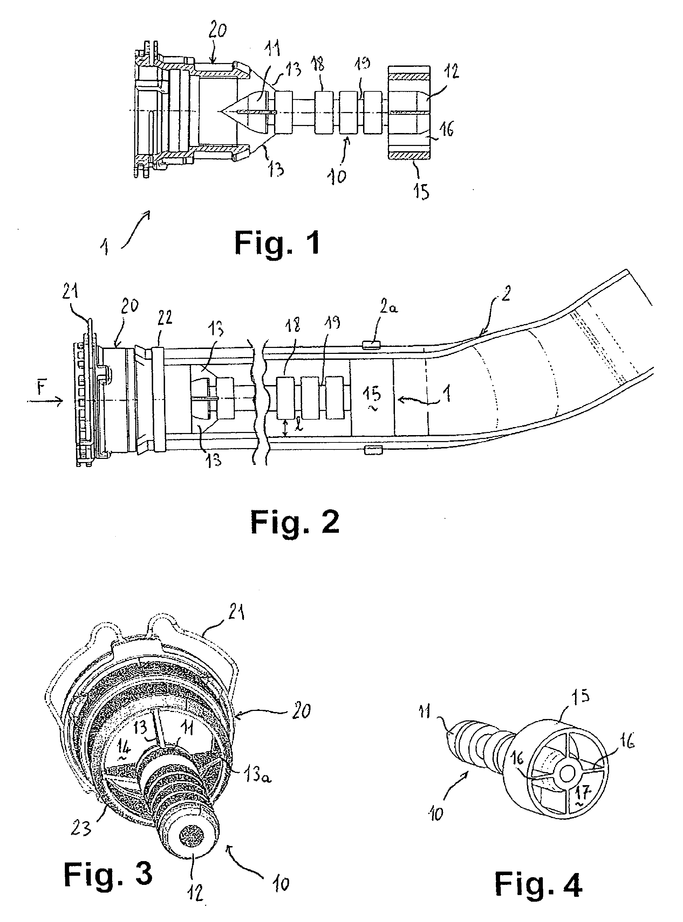

Le dispositif d'atténuation acoustique 1 selon le premier mode de réalisation de l'invention qui est illustré aux figures 1 à 6 est adapté pour être monté radialement à l'intérieur d'une durite 2 en caoutchouc (visible aux figures 2, 5 et 6) dans une ligne d'admission d'air d'un moteur turbocompressé en formant des chambres acoustiques avec celle-ci. Le dispositif 1 comprend essentiellement :
- un tronçon tubulaire 10 présentant une première extrémité 11 fermée qui est axialement externe par rapport à la durite 2 (i.e. qui est destinée à être montée à proximité immédiate d'un bout de la durite 2) et une seconde extrémité 12 ouverte qui est axialement interne par rapport à la durite 2 (i.e. qui est destinée à être montée à distance des deux bouts de la durite 2), et
- un embout tubulaire 20 de raccordement de la durite 2 à la ligne, cet embout 20 étant équipé d'une épingle 21 en U (voir figures 2, 3 et 5) pour le verrouillage du raccordement et étant destiné à être emmanché dans la durite 2 et fixé à celle-ci par un collier de serrage 22 enserrant la durite 2 au droit de l'embout 20 axialement vers l'extérieur de la première extrémité 11.

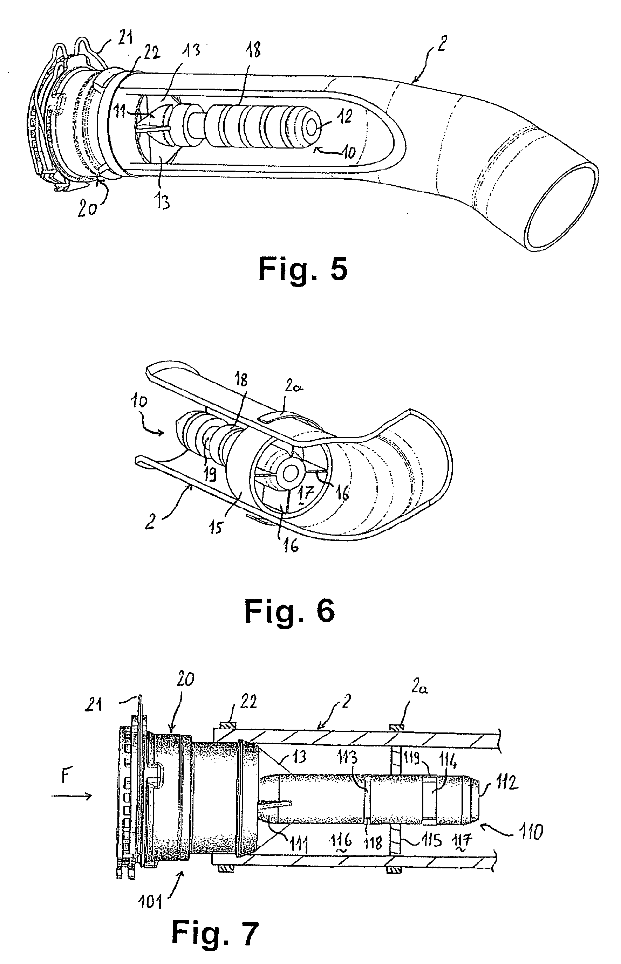

Cette première extrémité 11 du tronçon 10 est profilée (par exemple conique) et est fixée à l'embout 20 par des ailettes radiales 13 régulièrement espacées autour de ce tronçon 10 qui divisent le flux d'air F en autant de chambres acoustiques 14 (quatre dans l'exemple illustré à la figure 3) séparées entre elles dans la direction circonférentielle, et sa seconde extrémité 12 est pourvue d'un anneau 15 coaxial au tronçon 10 qui est relié à ce dernier par des ailes radiales 16 régulièrement espacées dans la direction circonférentielle et qui est destiné à être monté au contact de la durite 2, de sorte que ces ailes 16 forment également autant de chambres 17 (quatre dans l'exemple illustré aux figures 4 et 6) divisant ce flux d'air F. Ces ailes 16 peuvent respectivement être situées dans les mêmes plans radiaux que les ailettes 13, ce qui procure un division du flux d'air F identique aux deux extrémités 11 et 12 du tronçon 10.

Dans cet exemple de réalisation notamment visible à la figure 3, les quatre ailettes 13 sont sensiblement triangulaires et ont chacune un sommet radialement externe 13a fixé de manière amovible par encliquetage au bord circonférentiel adjacent 23 de l'embout 20. Quant aux ailes 16, elles sont chacune de forme sensiblement rectangulaire en étant solidaires du tronçon 10.

Ce tronçon 10 présente dans ce premier mode de réalisation une paroi tubulaire fermée (i.e. dépourvue d'ouvertures) qui définit une succession de collerettes ou créneaux 18 et de rétrécissements 19 circonférentiels dans la direction axiale. Ces collerettes 18 et rétrécissements 19 sont conçus pour ménager des espaces annulaires de largeur variable avec la durite 2 pour permettre le passage du flux d'air F entre le tronçon 10 et la durite 2, étant précisé que l'on prévoit un espacement radial I d'au moins 5 mm entre ces collerettes 18 et cette durite 2.

Quant à l'anneau 15 prolongeant la seconde extrémité 12 du tronçon 10 au contact de la durite 2 via les ailes 16, il est maintenu au contact de cette durite 2 par un collier de maintien 2a que l'on applique sur la durite 2 au droit de cet anneau 15.

Le dispositif d'atténuation acoustique 101 selon le second mode de réalisation de l'invention qui est illustré à la figure 7 se différencie uniquement du dispositif 1 qui vient d'être décrit, en ce que :
- son tronçon tubulaire 110 est ouvert non seulement en sa seconde extrémité 112 (sa première extrémité 111 étant profilée en forme de cône à l'instar de celle du tronçon 10) mais en outre sur sa paroi cylindrique qui est par exemple dépourvue de toute collerette et de tout rétrécissement, de sorte que les deux séries d'ouvertures 113 et 114 formées sur cette paroi cylindrique du tronçon 110 fassent communiquer l'intérieur de celui-ci avec l'espace annulaire entre le tronçon 110 et la durite 2, et en ce que
- ce tronçon 110 est pourvu, en lieu et place de l'anneau 15 et des ailes radiales 16 précités, d'au moins une cloison radiale annulaire 115 (i.e. en forme d'un disque percé en son centre) axialement entre ces deux séries d'ouvertures 113 et 114 qui délimite ainsi deux chambres annulaires de résonance 116 et 117 formées entre le tronçon 110 et la durite 2 axialement de part et d'autre de cette cloison 115.

A l'instar du premier mode de réalisation, un collier de maintien 2a enserre la durite 2 au droit de la cloison 115, pour maintenir le tronçon 110 en position à l'intérieur de cette durite 2.

Dans l'exemple de la figure 7, chaque série d'ouvertures 113 et 114 est formée de deux lumières évidées en arcs de cercle qui sont reliées entre elles dans la direction circonférentielle par deux pattes axiales de liaison 118 et 119. On notera que chacune de ces deux séries d'ouvertures 113 et 114 pourrait être formée d'un nombre différent d'ouvertures pouvant en outre présenter des géométries différentes, comme par exemple des orifices circulaires, oblongs et/ou des fentes.

On notera également que ce tronçon 110 pourrait comporter plusieurs cloisons annulaires 115 espacées dans la direction axiale du type de celle illustré à la figure 7, formant de cette manière une succession de chambres annulaires de résonance entre le dispositif 101 et la durite 2.

D'une manière générale en référence aux deux modes de réalisation précités, on notera que la durite 2 recevant le dispositif d'atténuation 1, 101 selon l'invention peut être cintrée et/ou coudée en un ou plusieurs emplacement(s), étant précisé que ce dispositif 1, 101 y est inséré en une portion rectiligne de cette durite 2.

## Revendications

1. Dispositif d'atténuation acoustique (1, 101) pour une ligne d'admission d'un moteur thermique à combustion interne, le dispositif étant destiné à être parcouru par un flux gazeux (F) sous pression et adapté pour être monté radialement à l'intérieur d'un tuyau flexible (2) en formant des chambres acoustiques (14, 17, 116, 117) avec ce dernier, le dispositif comprenant un tronçon tubulaire (10, 110) et des moyens de formation (13, 15, 16, 113, 114, 115) de ces chambres qui prolongent ce tronçon radialement vers l'extérieur, **caractérisé en ce que** le dispositif comprend un embout tubulaire (20) de raccordement du tuyau à la ligne, embout auquel est fixé ce tronçon par une première partie (13) desdits moyens qui est formée en une première extrémité (11, 111) du tronçon et qui est apte à y diviser ledit flux.

2. Dispositif (1, 101) selon la revendication 1, **caractérisé en ce que** ladite première partie (13) desdits moyens (13, 15, 16, 113, 114, 115) comporte des extensions (13) sensiblement radiales régulièrement espacées autour de ce tronçon (10, 110) qui divisent ledit flux (F) en ladite première extrémité (11, 111) en autant de chambres (14) séparées entre elles dans la direction circonférentielle.

3. Dispositif (1, 101) selon la revendication 2, **caractérisé en ce que** lesdites extensions (13) sont formées par des ailettes (13) sensiblement triangulaires qui présentent chacune un sommet (13a) radialement externe fixé mécaniquement audit embout (20).

4. Dispositif (1) selon une des revendications 1 à 3, **caractérisé en ce que** ledit tronçon (10) présente une succession de collerettes (18) et de rétrécissements circonférentiels (19) dans la direction axiale, ces collerettes étant conçues pour ménager des espaces annulaires avec le tuyau (2) pour permettre le passage dudit flux (F) entre le tronçon et ce tuyau.

5. Dispositif (1) selon la revendication 4, **caractérisé en ce que** lesdites collerettes (18) et lesdits rétrécissements (19) sont formés par une paroi tubulaire fermée dudit tronçon (10).

6. Dispositif (1) selon une des revendications précédentes, **caractérisé en ce qu'**une seconde partie (15, 16) desdits moyens de formation de chambres (13, 15, 16) est formée vers une seconde extrémité (12) dudit tronçon (10) sous la forme d'au moins un anneau (15) coaxial au tronçon, qui est relié à ce dernier par des ailes radiales (16) régulièrement espacées dans la direction circonférentielle et qui est destiné à être monté au contact du tuyau (2), de sorte que ces ailes forment autant de chambres (17) divisant ledit flux (F).

7. Dispositif (101) selon une des revendications 1 à 3, **caractérisé en ce que** ledit tronçon (110) est prolongé radialement par au moins une cloison annulaire (115) destinée à être montée au contact du tuyau (2) et délimitant deux chambres annulaires (116 et 117) qui sont formées entre le tronçon et le tuyau de part et d'autre de cette cloison et avec lesquelles communique le tronçon par des ouvertures (113 et 114) de sa paroi, ladite au moins une cloison formant une seconde partie desdits moyens (13, 113, 114, 115).

8. Dispositif (101) selon la revendication 7, **caractérisé en ce que** le tronçon (110) présente au moins deux ouvertures (113 et 114) communiquant avec chacune des deux chambres (116 et 117) formées de part et d'autre de ladite au moins une cloison (115), ces ouvertures étant formées dans la direction circonférentielle par des lumières évidées en arcs de cercle et reliées entre elles par au moins deux pattes axiales de liaison (118 et 119).

9. Tuyau flexible (2), tel qu'une durite en caoutchouc, pour une ligne d'admission d'un moteur thermique à combustion interne, le tuyau étant équipé dans son espace radialement interne d'au moins un dispositif d'atténuation acoustique (1, 101) monté au contact de la face radialement interne du tuyau, **caractérisé en ce que** ledit au moins un dispositif est tel que défini à l'une des revendications précédentes et est monté au contact du tuyau par ledit embout (20) et par lesdits moyens de formation des chambres (13, 15, 16, 113, 114, 115) qui prolongent ledit tronçon (10, 110).

10. Tuyau flexible (2) selon la revendication 9, **caractérisé en ce qu'**il est pourvu d'un collier de maintien (2a) radialement au droit d'une seconde partie (15, 16, 113, 114, 115) desdits moyens (13, 15, 16, 113, 114, 115) qui est définie à la revendication 6 et qui est alors formée par ledit anneau (15) relié au tronçon (10) par lesdites ailes radiales (16) et monté au contact du tuyau, ou bien à la revendication 7, cette seconde partie étant alors formée par ladite au moins une cloison annulaire (115) qui est montée au contact du tuyau.

11. Tuyau flexible (2) selon la revendication 9 ou 10, **caractérisé en ce que** ledit embout (20) est emmanché dans le tuyau et fixé à celui-ci par un collier de serrage (22) qui est monté autour du tuyau axialement vers l'extérieur de ladite première partie (13) desdits moyens (13, 15, 16, 113, 114, 115).

12. Tuyau flexible (2) selon une des revendications 9 à 11, **caractérisé en ce que** ledit embout (20) est pourvu d'un organe de verrouillage (21) du raccordement.

13. Ligne d'admission d'un moteur thermique à combustion interne, tel qu'un moteur turbocompressé pour véhicule automobile, **caractérisée en ce qu'**elle comporte au moins un tuyau flexible (2) selon une des revendications 9 à 12.

## Claims

1. Acoustic attenuation device (1, 101) for an intake line of an internal combustion engine, the device being designed to permit circulation by a gaseous flow (F) under pressure and adapted to be mounted radially inside a flexible tube (2) by forming acoustic chambers (14, 17, 116, 117) with the latter, the device comprising a tubular section (10, 110) and means (13, 15, 16, 113, 114, 115) for forming these chambers which extend this section radially towards the exterior, **characterised in that** the device comprises a tubular fitting (20) for connecting the tube to the line, to which fitting this section is affixed by a first part (13) of said means disposed at a first end (11, 111) of the section and able to divide said flow there.

2. Device (1, 101) as claimed in claim 1, **characterised in that** said first part (13) of said means (13, 15, 16, 113, 114, 115) has substantially radial extensions (13) spaced regularly around this section (10, 110) which divide said flow (F) at said first end (11, 111) into as many chambers (14) separated from one another in the circumferential direction.

3. Device (1, 101) as claimed in claim 2, **characterised in that** said extensions (13) are formed by substantially triangular fins (13), each of which has a radially outer apex (13a) mechanically affixed to said fitting (20).

4. Device (1) as claimed in one of claims 1 to 3, **characterised in that** said section (10) has a succession of flanges (18) and circumferential narrower regions (19) in the axial direction, these flanges being designed to create annular gaps with the tube (2) to afford a passage for said flow (F) between the section and this tube.

5. Device (1) as claimed in claim 4, **characterised in that** said flanges (18) and said narrower regions (19) are formed by a closed tubular wall of said section (10).

6. Device (1) as claimed in one of the preceding claims, **characterised in that** a second part (15, 16) of said chamber forming means (13, 15, 16) is disposed towards a second end (12) of said section (10) in the form of at least one ring (15) coaxial with the section which is connected to the latter by radial fins (16) regularly spaced in the circumferential direction and which is designed to be mounted in contact with the tube (2), so that these fins form as many chambers (17) dividing said flow (F).

7. Device (101) as claimed in one of claims 1 to 3, **characterised in that** said section (110) is extended radially by at least one annular partition (115) designed to be mounted in contact with the tube (2) and bounding two annular chambers (116 and 117) which are formed between the section and the tube on either side of this partition and with which the section communicates via ports (113 and 114) in its wall, said at least one partition forming a second part of said means (13, 113, 114, 115).

8. Device (101) as claimed in claim 7, **characterised in that** the section (110) has at least two ports (113 and 114) communicating with each of the two chambers (116 and 117) formed on either side of the at least one partition (115), these ports being formed in the circumferential direction by apertures cut in circle arcs and connected to one another by at least two axial connecting lugs (118 and 119).

9. Flexible tube (2), such as a rubber hose, for an intake line of an internal combustion engine, the tube being equipped in its radially inner space with at least one acoustic attenuation device (1, 101) mounted in contact with the radially internal face of the tube, **characterised in that** said at least one device is as defined in one of the preceding claims and is mounted in contact with the tube by said fitting (20) and by said chamber forming means (13, 15, 16, 113, 114, 115) which extend said section (10, 110).

10. Flexible tube (2) as claimed in claim 9, **characterised in that** it is provided with a retaining collar (2a) radially aligned with a second part (15, 16, 113, 114, 115) of said means (13, 15, 16, 113, 114, 115), which second part is as defined in claim 6 and which is then formed by said ring (15) connected to the section (10) by said radial fins (16) and mounted in contact with the tube, or alternatively as defined in claim 7, this second part then being formed by said at least one annular partition (115), which is mounted in contact with the tube.

11. Flexible tube (2) as claimed in claim 9 or 10, **characterised in that** said fitting (20) is fitted inside the tube and affixed to the latter by a clamping collar (22) which is mounted around the tube axially towards the exterior of said first part (13) of said means (13, 15, 16, 113, 114, 115).

12. Flexible tube (2) as claimed in one of claims 9 to 11, **characterised in that** said fitting (20) is provided with an element (21) for locking the connection.

13. Intake line of an internal combustion engine, such as a turbo-charged engine for an automotive vehicle, **characterised in that** it has at least one flexible tube (2) as claimed in one of claims 9 to 12.

## Patentansprüche

1. Vorrichtung (1, 101) zur akustischen Dämpfung für eine Einlassleitung eines Verbrennungsmotors, wobei die Vorrichtung dazu bestimmt ist, von einem gasartigen Fluss (F) unter Druck durchlaufen zu werden, und dazu ausgestaltet ist, radial an der Innenseite eines flexiblen Schlauches (2) angebracht zu werden, wobei mit dem letzteren akustische Kammern (14, 17, 116, 117) gebildet werden, wobei die Vorrichtung einen röhrenförmigen Abschnitt (10, 110) und Mittel zur Ausbildung (13, 15, 16, 113, 114, 115) dieser Kammern umfasst, welche diesen Abschnitt radial zu der Außenseite hin verlängern, **dadurch gekennzeichnet, dass** die Vorrichtung ein röhrenförmiges Ansatzstück (20) zum Anschließen des Schlauches an der Leitung umfasst, an welchem Ansatzstück dieser Abschnitt durch einen ersten Teil (13) der Mittel befestigt ist, welcher an einem ersten Ende (11, 111) des Abschnitts ausgebildet ist und welcher dazu ausgestaltet ist, dort den Fluss aufzuteilen.

2. Vorrichtung (1, 101) nach Anspruch 1, **dadurch gekennzeichnet, dass** der erste Teil (13) der Mittel (13, 15, 16, 113, 114, 115) im Wesentlichen radiale Verlängerungen (13) umfasst, welche regelmäßig um diesen Abschnitt (10, 110) herum beabstandet sind, welche den Fluss (F) an dem ersten Ende (11, 111) aufteilen, so wie die Kammern (14) untereinander in der Umfangsrichtung getrennt sind.

3. Vorrichtung (1, 101) nach Anspruch 2, **dadurch gekennzeichnet, dass** die Verlängerungen (13) gebildet sind durch im Wesentlichen dreieckige Flügel (13), welche jeweils einen radial äußeren Scheitelpunkt (13a) aufweisen, welcher mechanisch an dem Ansatzstück (20) befestigt ist.

4. Vorrichtung (1) nach einem der Ansprüche 1-3, **dadurch gekennzeichnet, dass** der Abschnitt (10) eine Folge von Satteln (18) und Umfangsverjüngungen (19) in der axialen Richtung aufweist, wobei diese Sattel dazu ausgestaltet sind, ringförmige Räume mit dem Schlauch (2) auszubilden, um den Durchgang des Flusses (F) zwischen dem Abschnitt und diesem Schlauch zu ermöglichen.

5. Vorrichtung (1) nach Anspruch 4, **dadurch gekennzeichnet, dass** die Sattel (18) und die Verjüngungen (19) durch eine geschlossene röhrenförmige Wand des Abschnitts (10) gebildet sind.

6. Vorrichtung (1) nach einem der vorhergehenden Ansprüche, **dadurch gekennzeichnet, dass** ein zweiter Teil (15, 16) der Mittel zur Ausbildung von Kammern (13, 15, 16) in Richtung eines zweiten Endes (12) des Abschnitts (10) in Form wenigstens eines Rings (15) gebildet ist, der koaxial zu dem Abschnitt ist, welcher mit dem letzteren durch radiale Flügel (16) verbunden ist, welche regelmäßig in der Umfangsrichtung beabstandet sind, und welcher dazu bestimmt ist, im Kontakt mit dem Schlauch (2) angebracht zu werden, sodass diese Flügel so den Fluss (F) aufteilende Kammern (17) bildet.

7. Vorrichtung (101) nach einem der Ansprüche 1-3, **dadurch gekennzeichnet, dass** der Abschnitt (110) radial durch wenigstens eine ringförmige Trennwand (115) verlängert ist, welche dazu bestimmt ist, im Kontakt mit dem Schlauch (2) angebracht zu werden und zwei ringförmige Kammern (116 und 117) begrenzt, welche zwischen dem Abschnitt und dem Schlauch auf beiden Seiten dieser Trennwand ausgebildet sind, und mit welchen der Abschnitt über Öffnungen (113 und 114) seiner Wand in Verbindung steht, wobei die wenigstens eine Trennwand einen zweiten Teil der Mittel (13, 113, 114, 115) bildet.

8. Vorrichtung (101) nach Anspruch 7, **dadurch gekennzeichnet, dass** der Abschnitt (110) wenigstens zwei Öffnungen (113 und 114) aufweist, welche mit jeder der zwei Kammern (116 und 117) in Verbindung stehen, welche auf beiden Seiten der wenigstens einen Trennwand (115) ausgebildet sind, wobei diese Öffnungen in der Umfangsrichtung durch kreisbogenförmige Hohlräume gebildet sind und untereinander durch wenigstens zwei axiale Verbindungslaschen (118 und 119) verbunden sind.

9. Flexibler Schlauch (2), wie zum Beispiel ein Duritschlauch aus Kautschuk, für eine Einlassleitung eines Verbrennungsmotors, wobei der Schlauch in seinem radial inneren Raum mit wenigstens einer Vorrichtung zur akustischen Dämpfung (1, 101) ausgestattet ist, welche im Kontakt mit der radial inneren Seite des Schlauches angebracht ist, **dadurch gekennzeichnet, dass** die wenigstens eine Vorrichtung nach einem der vorhergehenden Ansprüche ausgestaltet ist, und im Kontakt mit dem Schlauch über das Ansatzstück (20) und über die Mittel zur Ausbildung von Kammern (13, 15, 16, 113, 114, 115), welche den Abschnitt (10, 110) verlängern, angebracht ist.

10. Flexibler Schlauch (2) nach Anspruch 9, **dadurch gekennzeichnet, dass** er mit einem Haltering (2a) radial direkt unter einem zweiten Teil (15, 16, 113, 114, 115) der Mittel (13, 15, 16, 113, 114, 115) versehen ist, welcher definiert ist in dem Anspruch 6 und welcher somit durch den Ring (15) gebildet ist, welcher mit dem Abschnitt (10) über die radialen Flügel (16) verbunden ist und im Kontakt mit dem Schlauch angebracht ist, oder aber in dem Anspruch 7, wobei dieser zweite Teil somit gebildet ist durch die wenigstens eine ringförmige Trennwand (115), welche im Kontakt mit dem Schlauch angebracht ist.

11. Flexibler Schlauch (2) nach Anspruch 9 oder 10, **dadurch gekennzeichnet, dass** das Ansatzstück (20) in dem Schlauch eingepasst ist und an diesem durch eine Schelle (22) befestigt ist, welche um den Schlauch axial in Richtung der Außenseite des ersten Teils (13) der Mittel (13, 15, 16, 113, 114, 115) angebracht ist.

12. Flexibler Schlauch (2) nach einem der Ansprüche 9-11, **dadurch gekennzeichnet, dass** das Ansatzstück (20) mit einem Verriegelungselement (21) für as Anschließen versehen ist.

13. Einlassleitung für einen Verbrennungsmotor, wie zum Beispiel ein Motor mit Turbokompression für ein Automobil, **dadurch gekennzeichnet, dass** sie wenigstens einen flexiblen Schlauch (2) nach einem der Ansprüche 9-12 umfasst.
